# EUROPÄISCHE PATENTSCHRIFT

(11) **EP 2 069 188 B1**
(45) Veröffentlichungstag und Bekanntmachung des Hinweises auf die Patenterteilung: **16.06.2010**
(21) Anmeldenummer: 07801619.3
(22) Anmeldetag: 11.08.2007
(51) Int. Cl.: B62D 53/08

(54) **VORRICHTUNG ZUR DREHGELENKIGEN KUPPLUNG, INSBESONDERE VON SATTELAUFLIEGERZÜGEN**
DEVICE FOR SWIVEL JOINT COUPLING, PARTICULARLY FOR SEMI-TRAILERS
DISPOSITIF D'ACCOUPLEMENT À ARTICULATION PIVOTANTE, NOTAMMENT DE SEMI-REMORQUES

(30) Priorität: 07.10.2006 DE 102006047456
(43) Veröffentlichungstag der Anmeldung: 17.06.2009
(73) Patentinhaber: Staude & Company Unternehmensberatung, 42111 Wuppertal (DE)
(72) Erfinder: STAUDE, Rudolf, 42111 Wuppertal (DE)
(74) Vertreter: Patentanwälte Buse, Mentzel, Ludewig
(86) Internationale Anmeldenummer: PCT/EP2007/007124
(87) Internationale Veröffentlichungsnummer: WO 2008/040413

(56) Entgegenhaltungen:
- WO-A-2008/135204
- DE-A1- 10 312 302
- FR-A- 1 406 826
- GB-A- 1 205 314
- GB-A- 1 240 554
- US-A- 4 898 399
- US-A- 5 259 640

## Beschreibung

Die Erfindung betrifft eine Vorrichtung zur drehgelenkigen Kupplung, insbesondere von Sattelaufliegerzügen. Derartige Kupplungen dienen der Verbindung eines Sattelanhängers mit einer Zugmaschine. Das erste Kupplungselement am Sattelauflieger umfasst einen um eine Drehachse drehbar in einer Scheuerplatte aufgenommenen Drehteller. An dem Drehteller ist ein Königszapfen festgelegt, der mit der Sattelaufliegerkupplung an der Zugmaschine kuppelbar' ist. Dieser Königszapfen überträgt die Zugkräfte des Aufliegeranhängers und verhindert das Absatteln des Anhängers.

Eine bekannte drehgelenkige Kupplung für Sattelaufliegerzüge ist aus der deutschen Offenleegungsschrift DE 35 12 977 A1 bekannt. Das Drehlager zwischen dem Drehteller und der Scheuerplatte wird von einem Wälzlager in Form eines Axial-Radial-Kugellagers gebildet. Dieses Drehlager gestattet eine relative Drehung zwischen Zugmaschine und Aufliegeranhänger in einer Horizontalebene. Nachteilig bei dieser Vorrichtung ist, das das Auftreten von dynamischen Fahrinstabilitäten, die seit langem als Gieren, Über- und Untersteuern, als Jack-Knife-Effekt und als Schleudern bekannt sind, nicht verhindert werden. Derartige Fahrinstabilitäten haben in der Vergangenheit zu zahlreichen schweren Unfällen geführt. Sie basieren im Wesentlichen darauf, dass die Knicksicherheit von Aufliegerzügen mit nachlaufenden Achsen und bei Nachläufern, wie Gelenkbussen, nicht gegeben ist. Des Weiteren ist bei den bekannten Sattelaufliegerzügen das Rangieren sehr aufwendig, da insbesondere das Zurücksetzen des Sattelaufliegerzuges nur mit häufigem Nachkorrigieren möglich ist.

Die DE 103 12 302 A beschreibt eine Vorrichtung, die den Oberbegriff des Anspruchs 1 bildet.

Eine andere bekannte drehgelenkige Kupplung für Sattelaufliegerzüge ist aus der GB 1 205 314 bekannt. Hierbei greift eine Bremseinrichtung über Bremsbacken an die senkrechte Verlängerung des Königszapfens an, um die Drehbewegung des Anhängers zu bremsen. Nachteilig bei dieser Vorrichtung ist, dass enorme Bremskräfte aufgewendet werden müssen, da diese im Mittelpunkt der Drehbewegung angreift. Somit sind wesentlich größere Kräfte notwendig um die Drehbewegung des' Anhängers zu bremsen, als wenn diese Bremskräfte am Außenkranz des Aufliegers angreifen würden. Weiterhin ist keine Steuerung vorgesehen, die die dynamischen Fahrzustände misst und somit die Bremsvorrichtung in Kraft setzt in Abhängigkelt des momentanen Zustandes, dadurch kann anderen Schlingerbewegungen nicht entgegen gewirkt werden.

Eine weitere drehgelenkige Kupplung für Sattelaufliegerzüge ist aus der KR 1 406 826 bekannt. Hier ist eine ähnliche Bremse, wie in der GB 1 205 314, zusehen, nur dass nun nicht mehr über Bremsbacken sondern über eine Scheibe, die am Königszapfen angebracht ist, gebremst wird. Dadurch sind die oben genannten Nachteile jedoch nicht eliminiert, sondern es werden immer noch enorme Kräfte benötigt, um Schlingerbewegungen im Anhänger entgegenzuwirken. Ferner bestehen kein Drehkranz und Führungskeil, die die relativ großen Haltekräfte und Kippbelastungen aufnehmen können. Ebenso wenig ist in dieser Erfindung von einer Steuerung, welche die momentanen dynamischen Fahrtwerte erfasst die Rede, so das auch hier Schlingerbewegungen, außer dem Jack-Knife-Effekt, nicht entgegen gewirkt werden kann.

Aufgabe der Erfindung ist es daher, eine verbesserte Vorrichtung zur drehgelenkigen Kupplung, insbesondere von Sattelaufliegerzügen, zur Verfügung zu stellen, die das Auftreten von dynamischen Fahrinstabilitäten verhindert und somit das Unfallrisiko wesentlich verringert und darüber hinaus ein Rangieren des Sattelaufliegerzuges präzise und in kurzer Zeit ermöglicht.

Diese Aufgabe wird mit einer Vorrichtung mit den Merkmalen des Anspruches 1 gelöst; nämlich durch das Vorsehen einer Bremse, die eine Dämpfung der Drehbewegung um die Drehachse der Kupplung bewirken kann. Diese Dämpfung kann theoretisch bis zur Feststellung des Gelenkes in einem bestimmten Knickwinkel der gelenkig miteinander verbundenen Teile geführt werden, z.B. der gelenkig miteinander verbundenen Zugmaschine mit dem Aufliegeranhänger. Durch eine solche Fixierung des Knickwinkels über ein entsprechend großes Dämpfungsmoment im Drehgelenk des Sattelaufliegerzuges kann verteilhaft das Rangieren, insbesondere das spurtreue Zurücksetzen des Sattelaufliegerzuges präzise und in kürzester Zeit ausgeführt werden, ohne das allzu häufig nachkorrigiert werden muss. Während des Fahrbetriebes kann die Dämpfung beliebig stark gewählt werden und dient dazu, Gierbewegungen des Sattelaufliegers und instabile Fahrzustände, z.B. bei Kurvenfahrten, bei Spurwechsel oder infolge ungleicher Bodenbehaftung bei glatten oder nassen Fahrbahnen zu verhindert. Diese Drehgelenksdämpfüng bewirkt gleichzeitig eine Dämpfung von Schwingungen um die Hochachse. Vorteilhaft ist der Einsatz der erfindungsgemäßen Vorrichtung insbesondere für Fahrzeuge mit nachlaufenden Achsen.

Die erfindungsgemäße Vorrichtung zur drehgelenkigen Kupplung weist ein erstes Kupplungselement, z.B. an der Sattelaufliegerkupplung, und ein weiteres Kupplungselement, vorzugsweise an der Unterseite des Sattelaufliegers, auf, nämlich einen in der Scheuerplatte von Sattelaufliegern drehbar gelagerten Drehteller. Dieser Drehteller ist im Zentrum mit einem Königszapfen verbunden, der mit dem anderen Kupplungselement kuppelbar ist. Über ein Drehlager ist der Drehteller um die Drehachse, zusammen mit dem Königszapfen, drehbar.

Das Drehlager wird durch einen Kugeldrehkranz gebildet, wobei der äußere Drehkranz mit der Scheuerplatte verbunden ist und der innere Drehkranz fest mit dem Drehteller verbunden ist. Die zur Dämpfung vorgesehene Einrichtung wird als Bremse ausgebildet und an der Scheuerplatte so fest gelegt, dass eine radial nach außen gerichtete Bewegung dies zur Bremse gehörenden Bremsklotzes in Richtung des inneren Drehkranzes möglich ist. Durch ein Auftreffen des Bremsklotzes auf den inneren Drehkranz wird ein Reibmoment erzeugt, das zu einer Dämpfung der Drehbewegung führt. Es kann eine Bremse mit mehreren Bremsklötzen vorgesehen sein, mehrere Bremsen oder auch andere Dämpfungseinrichtungen.

Die Bremsen können manuell oder automatisch betätigt werde, vorzugsweise mittels eines Hydraulikaggregates oder auf pneumatischem Wege. Für die automatische Betätigung wird eine Steuerungseinheit vorgesehen. Diese Steuerungseinheit, berechnet aus den aktuellen Fahrzeugdaten, der Fahrgeschwindigkeit und dem Knickwinkel das erforderliche Dämpfungmoment für das Drehgelenk. Aus dem ermittelten Dämpfungsmoment werden die resultierenden Bremskräfte bestimmt, die durch Betätigung der Bremse auf der Innenseite des inneren Drehkranzes für den jeweiligen Fahrzustand mit dem geforderten zeitlichen Verlauf bei entsprechender Größe wirksam werden.

Die ermittelten Daten, insbesondere der Knickwinkel, werden bei einer besonderen Ausführungsform in einer Anzeigeneinheit, die sich vorzugsweise in der Fahrerkabine befindet, dargestellt. Die Übertragung der Signale kann drahtlos erfolgen oder über das elektrische Bordnetz.

Bei einer Ausführungsform der Vorrichtung ist zusätzlich eine Kontrolleinheit vorgesehen, die den aktuellen Fahrzustand aus den aktuellen Fahrzeugdaten, der Fahrgeschwindigkeit und dem Knickwinkel bestimmt und mit zulässigen vorbestimmten Werten vergleicht sowie bei Abweichungen entsprechende Signale zur Steuereinrichtung übermittelt, um beispielsweise die Betätigung der Bremse auszulösen.

Die Vorrichtung kann auf unterschiedliche Betriebsarten eingestellt werden, wie beispielsweise auf die Betriebsart "Fahrbetrieb" oder auf die Betriebsart "Rangierbetrieb". Bei der Betriebsart "Rangierbetrieb" kann ein vorgewählter Knickwinkel mittels der Bremse fixiert werden, der während des Rangieren eingehalten wird. Auf diese Art und Weise wird beispielsweise das gerade Zurücksetzen eines Sattelzuges auch bei wesentlichen Unebenheiten des Fahrbelages erleichtert. Für die Betriebsart "Fahrbetrieb" können Erfahrungswerte für die notwendigen Daten in der Kontrolleinheit eingespeichert werden, auf die die Steuereinheit bei der Berechnung des möglichen Dämpfungsmoments zurückgreifen kann. Die unterschiedlichen Betriebsarten können in der Anzeigeneinheit im Fahrerhaus angezeigt werden.

Zur Ermittlung des aktuellen Knickwinkels/Drehwinkels wird ein Sensor vorgesehen, der in Verlängerung der Drehachse des Königszapfens oberhalb des Drehtellers an der Scheuerplatte angeordnet und festgelegt ist. Durch den am Rande des Drehtellers vorgesehenen Führungskeil wird die Aufliegersattelkupplung zur Nullposition des Aufliegers fest ausgerichtet. Der Führungskeil stellt somit das Widerlager zum Dämpfungsmoment dar. Zugleich fixiert es die Nullposition für den Knickwinkel.

Schwingt der Aufliegeranhänger aus, d.h. dreht er sich um die vom Königszapfen gebildete Drehachse, so wird vom Sensor die Drehbewegung erfasst und über die Steuerungseinheit an die Anzeigeneinheit weitergeleitet, so dass der Knickwinkel in der Fahrerkabine abgelesen werden kann. Durch Betätigung einer Aktivierungstaste auf der Anzeigeneinheit kann dann während des Fahrbetriebes bzw. während des Rangierens der Knickwinkel fixiert und ein unkontrolliertes seitliches Ausweichen des Aufliegers vermieden werden. Auf diese Weise kann ein Rangiervorgang mit Hilfe der erfindungsgemäßen Vorrichtung in kürzerer Zeit präziser und ohne häufiges Nachkorrigieren ausgeführt werden.

Die Erfindung wird anhand eines Ausführungsbeispiels nachfolgend in den Zeichnungen erläutert. Es zeigen:
- Fig. 1: einen Ausschnitt aus einer erfindungsgemäßen Vor- richtung im Vertikalschnitt,
- Fig. 2: einen Ausschnitt der erfindungsgemäßen Vorrichtung im Horizontalschnitt.

In den Figuren ist eine erfindungsgemäße Vorrichtung auszugsweise für Sattelaufliegerzüge gezeigt. Eine Zugmaschine ist durch eine Sattelaufliegerkupplung an einem Aufliegeranhänger angekuppelt. Ein Kupplungselement ist über einen Lagerbock am Fahrgestell der Zugmaschine befestigt und das andere Kupplungselement umfasst eine an der Unterseite des Aufliegeranhängers angeordnete Scheuerplatte 2. In dieser Scheuerplatte 2 ist ein drehbar gelagerter Drehteller 3 aufgenommen. In Zentrum des Drehtellers 3 ist ein Königszapfen 4 montiert. Dieser Königszapfen 4 ist mit dem Kupplungselement der Zugmaschine kuppelbar, welches in den Figuren nicht gezeigt ist Am äußeren Umfangsrand des Drehtellers ist ein Drehkranz 5 vorgesehen, der Teil eines Kugeldrehkranzes ist. Die zweite Hälfte des Kugeldrehkranzes wird durch einen äußeren Drehkranz 12 gebildet, der an der Scheuerplatte 2 festgelegt ist.

Der Kugeldrehkranz 5 ermöglicht die Drehbewegung des Drehtellers 3 um die Drehachse 10 und damit eine relative Drehung zwischen Zugmaschine und Aufliegeranhänger in einer Horizontalebene. Es sind jedoch auch andere Drehlager als Drehgelenk einsetzbar.

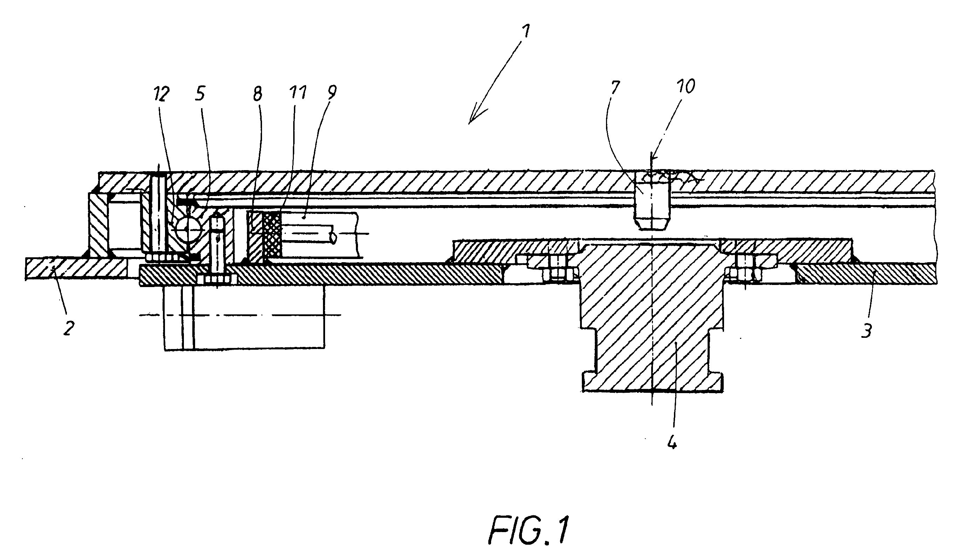

Die neu vorgesehene Drehgelenksdämpfung mittels der Bremse 9 ist ebenfalls innerhalb der Scheuerplatte 2 integriert, bei der Ausführungsform gemäß Fig. 1 zwischen Scheuerplatte 2 und Drehteller 3 innerhalb des inneren Drehkranzes 5. Auf diese Weise kann die Bremse 9 mit ihrem Bremsklotz 11 auf den inneren Drehkranz 5 einwirken.

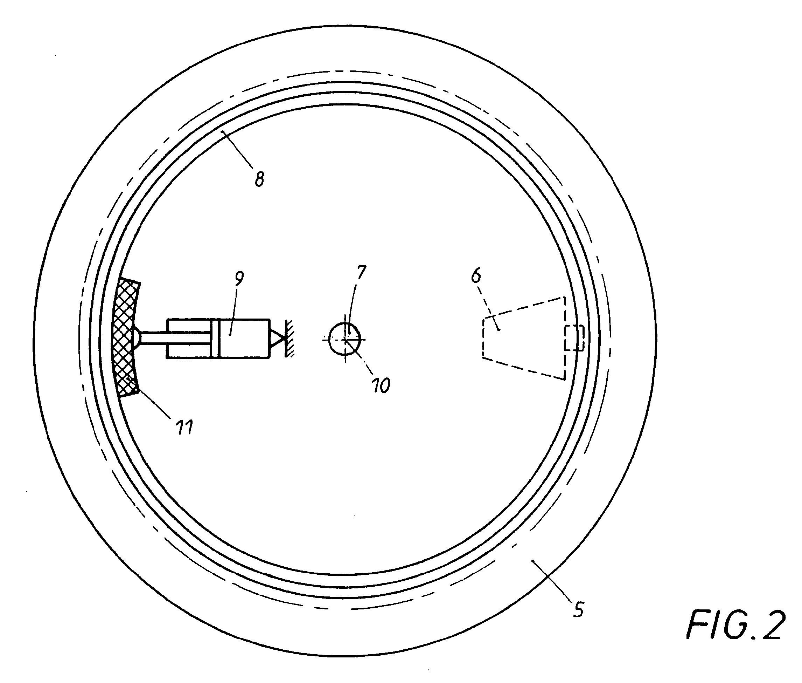

Bei der Ausführungsform gemäß Fig. 1 ist innerhalb des inneren Drehkranzes 5 ein zusätzlicher separater Ring 8 befestigt, so dass die Bremse 9 nicht direkt auf den inneren Drehkranz 5, sondern über den Ring 8, das Dämpfungsmoment ausübt. Die Bremse 9 ist mit einem Bremsklotz 11 verbunden, der aus einem Ausgangszustand ohne Einwirkung auf den inneren Drehkranz 5 oder den Ring 8 durch Betätigung der Bremse 9 in radialer Richtung nach außen bis zur Berührung und/oder Fixierung des inneren Drehkranzes 5 oder des Ringes 8 verschiebbar ist und durch das erzeugte Reibmoment eine Dämpfung bzw. Fixierung bewirkt. In der Fig. 1 und Fig. 2 ist ausschließlich eine Bremse 9 mit einem Bremsklotz 11 vorgesehen. Es besteht jedoch die Möglichkeit, eine Bremse 9 mit mehreren Bremsklötzen 11 auszurüsten bzw. mehrere Bremsen 9 vorzusehen. Die Erzeugung des Dämpfungsmomentes erfolgt also durch Einwirkung auf den inneren Drehkranz 5 oder Ring 8 des Drehtellers 3.

Eine Dämpfung kann selbstverständlich auch erzeugt werden, indem von außen auf einen äußeren Drehkranz eingewirkt wird, wenn dieser äußere Drehkranz Teil des Drehtellers ist. In einem solchen Fall würde der inneren Drehkranz an der Scheuerplatte festgelegt werden. Die in Fig. 1 und 2 gezeigte Anordnung ist jedoch die bevorzugte Ausführung, da diese von innen an das Drehlager (5,12) angreifende Bremse 9 kompakter gestaltet werden kann und durch ihre Anordnung innerhalb des inneren Drehkranzes (5) auch vor Schmutz und Beeinträchtigungen geschützt ist.

Die Betätigung der Bremse 9 kann manuell erfolgen und/oder automatisch, insbesondere gesteuert von einer Steuerungseinheit, die nicht gezeigt ist. In der Steuerungseinheit werden aus in der Kontrolleinheit hinterlegten Fahrzeugdaten, Fahrgeschwindigkeiten und Knickwinkeln zeitlich veränderte aktuelle Bremskräfte zur Dämpfung ermittelt und in entsprechender Weise das Antriebsaggregat, beispielsweise ein Hydraulikaggregat, angesteuert und betätig. Zusätzlich können die Daten auch an eine Anzeigeneinheit weitergeleitet werden, wobei sich diese Anzeigeneinheit vorzugsweise in der Fahrerkabine befindet, so dass die Steuerung und Betätigung der Bremse aus der Fahrerkabine mitverfolgt werden kann.

In einer Anzeigeneinrichtung können zusätzlich weitere Anzeigen vorgesehen werden, nämlich die aktivierte Betriebsart, wählbar zwischen der Betriebsart "Fahrbetrieb" oder "Rangierbetrieb". Darüber hinaus kann der aktuelle Knickwinkel angezeigt werden. Der Knickwinkel wird mittels eines Sensors 7, vorzugsweise berührungslos, erfasst. Dieser Sensor 7 ist an der Scheuerplatte 2 oberhalb des Königszapfens 4 in Verlängerung der Drehachse 10 angeordnet. Die Nullposition des Knickwinkels wird separat festgelegt. In Fig. 2 ist dazu ein Führungskeil 6 vorgesehen, der am Außenrand des Drehtellers 3 angeordnet wird. Eine Abweichung von dieser postition wird als Knickwinkel vom Sensor 7 registriert und an die Steuerungseinheit als Signal weitergegeben, Von der Steuerungseinheit wird eine entsprechende Information an die Anzeigeneinheit gesendet, die für den Fahrer den Knickwinkel ablesbar macht.

Bei der Betriebsart "Fahrbetrieb" wird das Dämpfungsmoment zeitabhängig vom aktuellen Fahrzeugzustand gesteuert. Es werden die aktuellen Dämpfungswerte auf der Grundlage von in der Kontrolleinheit gespeicherten bzw. durch Programmierung zu hinterlegenden Fahrzeugdaten (Konstruktionsdaten), Fahrgeschwindigkeit, und Drehwinkel/Knickwinkel berechnet. Die so ermittelten erforderlichen Bremskräfte für das aktuelle Dämpfungsmoment werden von der. Steuereinheit durch entsprechende Signale an den Bremsantrieb, z.B. einen Hydraulikantrieb, weitergeleitet.

Für die Betriebsart "Rangierbetrieb" lässt sich ein vorgegebener Knickwinkel fixieren, beispielsweise über die Aktivierung einer entsprechenden Taste der Anzeigeneinheit in der Fahrerkabine oder über manuelle Betätigung der Bremse 9. Mit einem fixierten Knickwinkel lässt sich ein Sattelaufliegerzug besser rangieren, insbesondere über längere Strecken in der vorgesehenen Spur zurücksetzen. Beim Rangieren mit konstanten Knickwinkel oder Einparken mit wechselnden Knickwinkel ist das Bremsmoment für die aktivierte Drehgelenksdämpfung so groß, dass der Sattelauflieger spurtreu manövriert werden kann, trotz ungleicher Widerstände, die an den einzelnen Rädern anliegen können. Solche ungleichen Widerstände werden beispielsweise durch das Überfahren eines Bordsteins, ungleichmäßigem Fahrbahnbelag, unterschiedlichen Haftbedingungen gegenüber den Fahrbahnbelag aufgrund von Feuchtigkeit, Glätte oder aufgrund unterschiedlich verteilter Ladung im Sattelauflieger verursacht. Das Dämpfungsmoment ist bei eingeschalteter Rangierhilfe so groß, dass das Ausweichen des Sattelaufliegers aufgrund asymmetrisch angreifender Kräfte (Gegenmomente) vermieden wird. Der Aufwand beim Rangieren wird dadurch verringert und der zeitliche Aufwand wesentlich reduziert. Nach oben ist das Bremsmoment so zu begrenzen, dass bei Fehlbedienung oder bei Fährfehlern eine Beschädigung der Zugvorrichtung durch zu große Dämpfungsmomente einstellbar ist.

Die ständige Anzeige und Visualisierung des Knickwinkels beim Fahren und Rangieren und die Einübung von Erfahrungswerten erlaubt den Rangiervorgang zeitlich und räumlich zu optimieren. Ein unkontrolliertes Ausweichen des Sattelaufliegers aus der Spur beim Rangieren wird durch die' erfindungsgemäße Vorrichtung weitgehend vermieden.

Die in den Zeichnungen dargestellt und vorbeschriebene Ausführungsform der Erfindung stellt diese nur beispielsweise dar, die Erfindung ist keinesfalls auf diese Ausführungsform beschränkt. Es sind vielmehr noch mancherlei Änderungen und andere Ausgestaltungen des Erfindungsgegenstandes denkbar. So ist das Drehlager des Drehtellers 3 nicht auf einen Kugeldrehkranz 5 beschränkt. Die Anordnung des Sensors oder der Bremse kann entsprechend den baulichen Gegebenheiten gewählt werden. Der Antrieb für die Bremse, die Steuereinheit und Anzeigeneinheit sind in den Fig. nicht dargestellt, da die Art des Antriebs das Vorhandensein einer Steuerund Anzeigeneinheit vom Anwender entsprechend den von ihnen gewühschten Notwendigkeiten ausgewählt werden.

## Patentansprüche

1. Vorrichtung zur drehgelenkigen Kupplung, insbesondere von Sattelaufliegerzügen,
mit einem ersten Kupplungselement umfassend einen um eine Drehachse (10) drehbar in einer Scheuerplatte (2) aufgenommenen Drehteller (3) sowie einem mit dem Drehteller (3) fest verbundenen Königszapfen (4), der mit dem zweiten Kupplungselement kuppelbar ist, wobei zur drehgelenkigen Kupplung ein Drehgelenk vorgesehen ist, vorzugsweise ein Kugeldrehkranz, wobei ein äußerer Drehkranz (12) an der Scheuerplatte (2) befestigt ist und ein innerer Drehkranz (5) am umfangsseitigen Rand des Drehtellers (3) angeordnet ist,
**dadurch gekennzeichnet,**
**dass** in die Vorrichtung (1) im Bereich der Scheuerplatte (2) mindestens ein Dämpfungselement integriert ist, welches eine Dämpfung der Drehbewegung um die Drehachse (10) bewirkt,
**dass** das Dämpfungselement eine Bremse (9) ist
und **dass** die Bremse (9) oberhalb des Drehtellers (3) an der Scheuerplatte (2) festgelegt ist und bei Betätigung ein Dämpfungsmoment direkt oder indirekt auf den inneren Drehkranz (5) oder auf einen Ring (8), der innerhalb des inneren Drehranzes (5) befestigt ist, ausüben kann.

2. Vorrichtung nach Anspruch 1, **dadurch gekennzeichnet, dass** die Bremse (9) ein oder mehrere Bremsklötze (11) besitzt, die bei Betätigung der Bremse (9) in radialer Richtung nach außen verschiebbar sind.

3. Vorrichtung nach Anspruch 1 order 2, **dadurch gekennzeichnet, dass** die Bremse (9) manuell und/ oder automatisch betätigbar ist, vorzugsweise pneumatisch oder hydraulisch.

4. Vorrichtung nach Anspruch 3, **dadurch gekennzeichnet, dass** die Bremse (9) automatisch über eine Steuereinheit ansteuerbar ist, die mit einer Anzeige- und/ oder Kontrolleinheit verbunden ist.

5. Vorrichtung nach einem der Ansprüche 1 bis 4, **dadurch gekennzeichnet, dass** die Steuereinheit das benötigte Dämpfungsmoment für die jeweils aktuellen Fahrzustand aus den aktuellen Fahrzeugdaten, der Fahrgeschwindigkeit und dem Knickwinkel ermittelt, um die Bremse (9) entsprechend zu betätigen.

6. Vorrichtung nach Anspruch 5, **dadurch gekennzeichnet, dass** der Knickwinkel über einen Sensor (7) erfasst wird, wobei der Sensor (7) in Verlängerung der Drehachse (10) des Königszapfens (4) oberhalb des Drehtellers (3) an der Scheuerplatte (2) festgelegt ist.

7. Vorrichtung nach Anspruch 6, **dadurch gekennzeichnet, dass** für die vom Sensor (7) zu erfassende Nullposition des Knickwinkel ein Führungskeil (6) am Rande des Drehtellers (3) vorgesehen ist.

8. Vorrichtung nach einem der Ansprüche 4 bis 7, **dadurch gekennzeichnet, dass** die Anzeigeneinheit in der Fahrkabine des Sattelzuges angeordnet ist und diese Anzeigeneinheit auf unterschiedliche Betriebsarten eingestellt werden kann, vorzugsweise die Betriebsarten "Fahrbetrieb" oder "Rangierbetrieb".

9. Vorrichtung nach Anspruch 8, **dadurch gekennzeichnet, dass** die Anzeigeneinheit neben der aktiven Betriebsart zusätzlich den aktuellen Knickwinkel anzeigt.

10. Vorrichtung nach einem der Ansprüche 8 oder 9, **dadurch gekennzeichnet, dass** für die Betriebsart "Rangierbetrieb" ein gewählter Knickwinkel einstellbar und mittels der Bremse (9) oder eines anderen Dämpfungselementes fixierbar ist.

11. Vorrichtung nach einem der Ansprüche 4 bis 10, **dadurch gekennzeichnet, dass** in der Kontrolleinheit Vergleichsdaten für Fahrzeugdaten, Fahrgeschwindigkeiten, Knickwinkel und optimale Dämpfungswerte hinterlegt sind.

12. Vorrichtung nach einem der Ansprüche 4 bis 11, **dadurch gekennzeichnet; dass** die Signale zwischen der Steuereinheit und der Anzeige- und /oder Kontrolleinheit drahtlos oder über das elektrische Bordnetz übertragen werden.

13. Vorrichtung nach einem der Ansprüche 1 bis 12, **dadurch gekennzeichnet, dass** der Königszapfen als Zugmessbolzen zur Ermittlung der aktuellen Zuglasten des Aufliegeranhängers ausgebildet ist.

## Claims

1. Device for a pivotal coupling, in particular of semi-trailers, with a first coupling element including a rotary disk (**3**) rotatable around a rotary axis (**10**) pivotal around an axis and incorporated in a chafe plate (**2**) as well a central pivot (**4**) fixedly connected to the rotary disk (**3**) which is detachable with the second coupling element, wherein a swivel joint is provided for pivotal coupling, preferably a ball swivel ring, wherein an outer swivel ring (**12**) is mounted on the chafe plate (**2**) and an inner swivel ring (**5**) is arranged on the circumferential rim of the rotary disk (**3**)
**characterized in that**,
in the device (**1**) in the area of the chafe plate (**2**) at least one damping element is integrated which effects a damping of the swivel movement around the rotary axis (**10**),
the damping element is formed as brake (9)
and the brake (**9**) above the rotary disk (**3**) is fixed to the chafe plate (**2**) and when activated a damping momentum can be exerted directly or indirectly on the inner swivel ring (**5**) or on a ring (**8**) which is mounted within the inner swivel ring (**5**).

2. Device according to claim 1, wherein the brake (**9**) has one or more brake shoes (**11**) which are displaceable in radial outward direction when activating the brake (**9**).

3. Device according to claim **1** or **2**, wherein the brake (**9**) can be operated manually and/or automatically, preferably pneumatically or hydraulically.

4. Device according to claim 3, wherein the brake (9) is accessible automatically through a processing unit which is connected with an indicating unit and/or a control unit.

5. Device according to any one of claims **1** to **4**, wherein the processing unit determines the necessary damping momentum for the respective current driving condition from the current vehicle data, the driving speed and the kink angle in order to activate the brake (**9**) accordingly.

6. Device according to claim **5**, wherein the kink angle is collected via a sensor (**7**), wherein the sensor (**7**) is fixedly mounted above the rotary disk (**3**) at the chafe plate (**2**) in extension of the rotary axis (**10**) of the central pivot (**4**).

7. Device according to claim **6**, wherein a guide wedge (**6**) is arranged on the rim of the rotary disk (**3**) for the capture of the zero position of the kink angle through the sensor (**7**).

8. Device according to any one of claims **4** to **7**, wherein the indicating unit is arranged inside the driver's cab of the trailer truck and that this indicating unit can be set for different operation modes, preferably the operation modes "driving mode" or "taxiing mode".

9. Device according to claim **8**, wherein the indicating unit indicates aside from the operation mode additionally the current kink angle.

10. Device according to any one of claims **8** or **9**, wherein for the operation mode "taxiing mode" a chosen kink angle can be adjusted and preset by means of the brake (**9**) or of another damping element.

11. Device according to one of claims **4** to **10**, wherein in the control unit empirical data for vehicle data, driving speeds, kink angles and optimum damping values is stored.

12. Device according to any one of claims **4** to **11**, wherein the signals between the processing unit and the indicating unit and/or the control unit are transferred in a wireless manner or via the on-board electrical system.

13. Device according to any one of claims **1** to **12**, wherein the central pivot is designed as tensile load bolt for the determination of the current tensile load of the semi-trailer.

## Revendications

1. Dispositif destiné à l'attelage à articulation pivotante notamment de semi-remorques,
avec un premier élément d'attelage comprenant un plateau tournant (3) logé dans un plateau à friction (2) de manière à pouvoir tourner autour d'un pivot (10) ainsi qu'un axe d'attelage (4) lié de manière fixe au plateau tournant (3) et qui peut être couplé au deuxième élément d'attelage, sachant que pour l'attelage à articulation pivotante il est prévu une articulation pivotante, de préférence une couronne d'orientation à billes, une couronne d'orientation extérieure (12) étant fixée sur le plateau à friction (2) et une couronne d'orientation intérieure (5) étant disposée sur le bord circonférentiel du plateau tournant (3),
**caractérisé**
**en ce que** dans le dispositif (1) est intégré au niveau du plateau à friction (2) au moins un élément amortisseur qui provoque un amortissement de la rotation autour du pivot (10),
que l'élément amortisseur est un frein (9),
et que le frein (9) est appuyé sur le plateau à friction (2) au-dessus du plateau tournant (3) et qu'à l'actionnement il peut exercer directement ou indirectement un couple d'amortissement sur la couronne d'orientation intérieure (5) ou sur un anneau (8) qui est fixé au sein de la couronne d'orientation intérieure (5).

2. Dispositif selon la revendication 1, **caractérisé en ce que** le frein (9) possède une ou plusieurs plaquettes (11) pouvant être déplacées en direction radiale vers l'extérieur lors de l'actionnement du frein (9).

3. Dispositif selon la revendication 1 ou 2, **caractérisé en ce que** le frein (9) peut être actionné manuellement ou automatiquement, de préférence de manière pneumatique ou hydraulique

4. Dispositif selon la revendication 3, **caractérisé en ce que** le frein (9) peut être déclenché automatiquement par l'intermédiaire d'une unité de commande qui est reliée à une unité d'affichage et/ou de contrôle.

5. Dispositif selon l'une des revendications 1 à 4, **caractérisé en ce que** l'unité de commande détermine le couple d'amortissement nécessaire à l'état de marche actuel à un moment précis à partir des données actuelles du véhicule, de la vitesse de marche du véhicule et de l'angle de flambage afin d'actionner le frein (9) en conséquence.

6. Dispositif selon la revendication 5, **caractérisé en ce que** l'angle de flambage est saisi par l'intermédiaire d'un capteur (7), le capteur (7) étant appuyé sur le plateau à friction (2) en prolongation du pivot (10) de l'axe d'attelage (4), au-dessus du plateau tournant (3).

7. Dispositif selon la revendication 6, **caractérisé en ce que** pour la position zéro de l'angle de flambage devant être saisie par le capteur (7), une clavette de guidage (6) est prévue au bord du plateau tournant (3).

8. Dispositif selon l'une des revendications 4 à 7, **caractérisé en ce que** l'unité d'affichage est disposée dans la cabine du conducteur du train routier et que cette unité d'affichage peut être réglée sur différents modes opératoires, de préférence sur les modes opératoires « marche » ou « manoeuvre ».

9. Dispositif selon la revendication 9, **caractérisé en ce que**, en plus du mode opératoire actif, l'unité d'affichage indique l'angle de flambage actuel.

10. Dispositif selon l'une des revendications 8 ou 9, **caractérisé en ce que** pour le mode opératoire « manoeuvre » il est possible de paramétrer un angle de flambage sélectionné et de le fixer au moyen du frein (9) ou d'un autre élément amortisseur.

11. Dispositif selon l'une des revendications 4 à 10, **caractérisé en ce que** des données de comparaison des caractéristiques des véhicules, vitesses de marche, angles de flambage et valeur optimales d'amortissement sont enregistrées dans l'unité de contrôle.

12. Dispositif selon l'une des revendications 4 à 11, **caractérisé en ce que** les signaux entre l'unité de commande et l'unité d'affichage et/ou de contrôle sont transmis sans fil ou par l'intermédiaire du réseau électrique de bord.

13. Dispositif selon l'une des revendications 1 à 12, **caractérisé en ce que** l'axe d'attelage est formé comme touche de mesure de la traction destinée à déterminer les charges de traction actuelles de la semi-remorque.
